# FASCICULE DE BREVET EUROPEEN

(11) **EP 3 211 994 B1**
(45) Date de publication et mention de la délivrance du brevet: **30.09.2020**
(21) Numéro de dépôt: 15798514.4
(22) Date de dépôt: 28.10.2015
(51) Int. Cl.: A01K 61/00

(54) **DISPOSITIF ET PROCÉDÉ POUR LA RÉALISATION D'UN HABITAT MARIN ARTIFICIEL SÉCURISÉ DANS DES PARTIES IMMERGÉES DE CONSTRUCTIONS**
VORRICHTUNG UND VERFAHREN ZUR HERSTELLUNG EINES SICHEREN KÜNSTLICHEN MEERESLEBENSRAUMS IN UNTERGETAUCHTEN ABSCHNITTEN VON KONSTRUKTIONEN
DEVICE AND METHOD FOR PRODUCING A SECURE ARTIFICIAL MARINE HABITAT IN SUBMERGED PORTIONS OF CONSTRUCTIONS

(30) Priorité: 28.10.2014 FR 1460343
(43) Date de publication de la demande: 06.09.2017
(73) Titulaire: Ecocean, 34070 Montpellier (FR)
(72) Inventeur: LECAILLON, Gilles, 34070 Montpellier (FR)
(74) Mandataire: IP Trust
(86) Numéro de dépôt international: PCT/FR2015/052903
(87) Numéro de publication internationale: WO 2016/066958

(56) Documents cités:
- CN-A- 103 168 724
- FR-A1- 2 810 684
- JP-A- 2001 275 515
- JP-A- 2007 295 908
- US-A1- 2002 069 832

## Description

### DOMAINE TECHNIQUE DE L'INVENTION

L'invention concerne le domaine des habitats marins artificiels.

L'invention concerne plus particulièrement un dispositif de barrage de l'entrée d'une anfractuosité ou d'une faille d'une construction au moins en partie immergée. Des dispositifs sont connus des documents FR 2 810 684 A1, CN 103 168 724 A, JP 2001 275515 A et JP 2007 295908 A.

Par construction en partie immergée, on entend des constructions du type digues, piles de ponts, barrage, acropodes ou similaire.

Le dispositif de barrage est destiné notamment pour la réalisation d'un habitat marin artificiel.

### ETAT DE LA TECHNIQUE

L'aménagement des zones côtières, et plus particulièrement la réalisation de constructions telles que des piles de pont, des digues, des acropodes, quais droit de ports, etc. conduit à une disparition inexorable de l'habitat naturel offert aux alevins par les petits fonds côtiers naturels détruits avec, pour conséquence, une baisse du taux de survie de ces derniers.

Afin de limiter l'impact de telles constructions sur la survie des populations de poissons, une tendance est au développement de constructions dites écologiques. Il apparait ainsi des zones côtières dont les constructions sont aménagées pour proposer des habitats adaptés aux différentes espèces. Parmi ces aménagements, sont proposés des digues ou des murs artificiels, avec des formes complexes ou formés d'enrochements de façon à former des anfractuosités destinées à servir d'habitats.

Si les digues et autres constructions côtières, lorsqu'elles sont aménagées avec des anfractuosités, intègrent directement le principe des récifs artificiels (habitats), elles n'assurent cependant pas la protection des espèces les plus vulnérables comme les alevins vis-à-vis de prédateurs. En effet, il arrive que des petits poissons (jeunes recrues, juvéniles de l'année ou autres) se réfugient dans des anfractuosités, se croyant à l'abri de prédateurs. Or, et en particulier lorsque les anfractuosités sont relativement grandes, il peut arriver que des prédateurs soient déjà présents dans l'anfractuosité, ou tout simplement puisse y rentrer, l'anfractuosité devenant alors un piège pour les alevins.

L'invention vise à remédier à ce problème en proposant un dispositif permettant d'assurer la protection de poissons de tailles données, et en particulier d'alevins, à l'intérieur d'anfractuosités ménagées dans une paroi d'une construction en partie immergée ou formées par des enrochements artificiels.

L'invention vise également à proposer un procédé pour réaliser de manière simple, rapide et peu couteuse des habitats sécurisés pour des poissons de tailles données, et en particulier d'alevins, dans les anfractuosités des digues ou de toute construction côtière en partie immergée.

### OBJET DE L'INVENTION

A cet effet, et selon un premier aspect, l'invention suivant la revendication 1 propose un dispositif de barrage de l'entrée d'une anfractuosité d'une construction au moins en partie immergée pour la réalisation d'un habitat artificiel sécurisé pour des poissons de tailles données, et notamment des alevins, ledit dispositif comprenant une plaque, un premier réseau d'éléments de barrage formés de tiges fixées sur la plaque et s'étendant dans une direction opposée à ladite plaque, un deuxième réseau d'éléments de barrage formés d'au moins un brin reliant des tiges du premier réseau entre elles et des moyens de fixation de la plaque sur un enrochement délimitant en tout ou partie l'anfractuosité.

Le dispositif de barrage selon l'invention permet ainsi de réaliser un habitat artificiel sécurisé pour des poissons de tailles données, et notamment des alevins, à partir d'anfractuosités existantes en obturant partiellement leur ouverture d'entrée. La présence d'un deuxième réseau d'éléments de barrage permet de renforcer l'effet de barrage obtenu par les tiges du premier réseau. On entend par anfractuosité une cavité, fissure ou zone définissant un passage, présente au niveau d'une construction ou d'un enrochement.

Avantageusement, le ou les brins du deuxième réseau est (sont) agencé(s) par rapport aux tiges du premier réseau de sorte à former un réseau transversal au premier réseau.

Les tiges du premier réseau s'étendent perpendiculairement à la plaque.

Afin d'assurer de manière optimale le passage des poissons autorisés tout en empêchant le passage des poissons non autorisés (prédateurs), chaque tige du premier réseau présentent un écartement d'au moins 4 centimètres et d'au plus 8 centimètres avec une tige adjacente du premier réseau.

Avantageusement, le premier réseau est formé de tiges de longueurs différentes. Cela permet ainsi de proposer un dispositif de barrage adapté à l'anfractuosité dont il doit limiter l'accès. Dans cette même optique, il peut être prévu que le premier réseau soit formé de tiges s'étendant de part et d'autre de la plaque.

Selon une configuration particulièrement avantageuse, tout ou partie des tiges du premier réseau sont montées coulissantes au travers de lumières ménagées dans la plaque. Cette configuration permet d'offrir un dispositif de barrage modulaire pouvant être adapté à tout type de forme et de taille d'anfractuosités.

Avantageusement, les tiges du premier réseau sont montées de manière amovible sur la plaque. Cela a pour avantage de faciliter la maintenance du dispositif de barrage, mais également de moduler le type de barrage à effectuer selon la taille de poissons à interdire et l'environnement de l'anfractuosité (environnement calme ou agité) en modulant les tiges du premier réseau de protection (par type de matériau et par taille).

Avantageusement, le premier réseau est formé en tout ou partie de tiges rigides. Cependant, afin de résister à la houle, les tiges sont réalisées de manière à présenter une certaine souplesse. Par « certaine souplesse », on entend des tiges suffisamment rigides pour empêcher les poissons non autorisés à passer au travers de celles-ci tout en ayant une souplesse suffisante pour permettre de suivre les mouvements de l'eau et ainsi éviter la rupture des tiges sous l'action du mouvement de l'eau. Selon une forme d'exécution particulière, le premier réseau est formé en tout ou partie de tiges en bois et/ou en élastomère.

Avantageusement, les brins du deuxième réseau sont répartis de manière à former au moins deux niveaux d'éléments de barrage. Il peut être également qu'ils soient arrangés pour s'étendre dans un plan sensiblement parallèle au plan de la plaque. Selon une configuration particulière, lesdits brins du deuxième réseau sont avantageusement arrangés pour définir un réseau d'éléments de barrages circulaire ou semi-circulaire.

Avantageusement, le deuxième réseau est formé en tout ou partie de brins de fibres textiles biodégradable.

Avantageusement, le dispositif de barrage est réalisé dans son ensemble dans des matériaux recyclables. Selon un mode de réalisation préféré, ledit dispositif est formé d'une plaque en métal, d'un premier réseau d'éléments de barrage constitué de tiges en bois et d'un deuxième réseau d'éléments de barrage constitué de brins en fibres de coco.

Avantageusement, la plaque est ajourée. Cela permet de dissiper l'énergie de l'eau lorsque le dispositif de barrage est placé dans une zone agitée.

L'invention concerne également un procédé suivant la revendication 15 et pour la réalisation d'un habitat artificiel sécurisé pour des poissons de tailles données, et notamment des alevins, le procédé consistant à fixer un dispositif de barrage selon l'une quelconque des revendications précédentes sur un enrochement ou un quai délimitant en tout ou partie une anfractuosité, le dispositif de barrage étant placé de façon à ce que les tiges du premier réseau s'étendent en tout ou partie au travers de l'anfractuosité pour en limiter l'accès.

### BREVE DESCRIPTION DES FIGURES

D'autres objets et avantages de l'invention apparaîtront au cours de la description qui suit, faite en référence aux dessins annexés, dans lesquels :
- la figure 1 illustre une vue latérale d'un dispositif de barrage selon un premier mode de réalisation de l'invention ;
- la figure 2 illustre une vue de dessus du support d'éléments de barrage du dispositif de barrage de la figure 1 ;

- la figure 3 illustre une vue latérale d'un dispositif de barrage selon un deuxième mode de réalisation de l'invention ;
- la figure 4 illustre une vue de dessus d'une variante de réalisation de support d'éléments de barrage ;
- la figure 5 illustre une vue latérale d'un dispositif de barrage selon un troisième mode de réalisation de l'invention ;
- les figures 6A et 6B illustrent une vue respectivement de dessus et latérale du support d'éléments de barrage du dispositif de barrage de la figure 5 ;
- la figure 7 illustre une vue partielle d'un enrochement pourvu d'une pluralité de dispositifs de barrage selon l'invention ;
- la figure 8 illustre une variante de réalisation de la plaque illustrée sur la figure 2 ;
- les figures 9A et 9B illustrent une variante de réalisation de la plaque semi-circulaire illustrée sur les figures 6A, 6B.

Pour plus de clarté, les éléments identiques ou similaires des différents modes de réalisation sont repérés par des signes de référence identiques sur l'ensemble des figures.

### DESCRIPTION DETAILLEE DES FIGURES

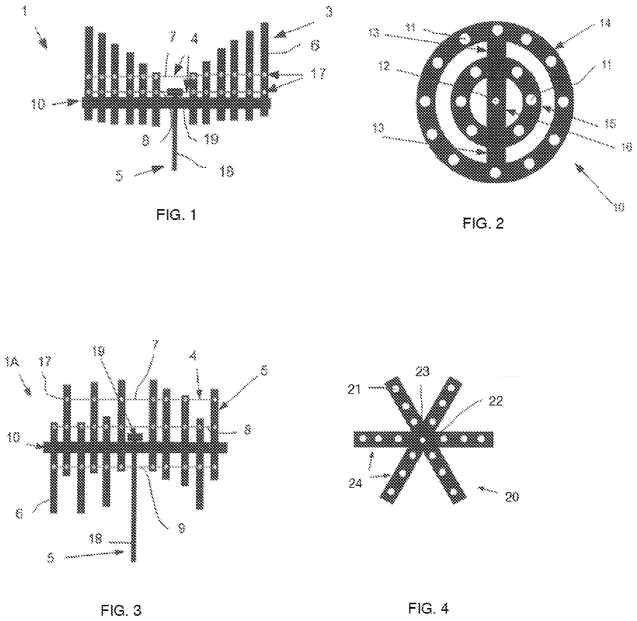

En relation avec les figures 1 et 2, il est décrit un dispositif de barrage 1 de l'entrée d'une anfractuosité selon un premier mode de réalisation de l'invention. Le dispositif de barrage 1 comprend un support d'éléments de barrage, deux réseaux 3, 4 d'éléments de barrage et des moyens 5 pour la fixation du dispositif de barrage sur un enrochement délimitant en tout ou partie l'anfractuosité, un acropode ou un quai.

Dans le mode de réalisation décrit, le support est une plaque ajourée 10 circulaire. Plus particulièrement, la plaque 10 est formée d'une première couronne 14 et d'une deuxième couronne 15 disposée à l'intérieur de la première couronne 14. Les première et deuxième couronnes 14, 15, nommées par la suite couronne extérieure et couronne intérieure, sont concentriques. Elles sont reliées entre elles par une paire d'entretoises 13. Les entretoises sont positionnées de préférence diamétralement opposées afin d'assurer la répartition des forces à laquelle la plaque est soumise lorsque celle-ci est immergée. La couronne intérieure 15 est pourvue d'une traverse 16 située, dans le mode de réalisation illustré, dans le prolongement des entretoises 13.

Les couronnes extérieures et intérieures 14, 15 comportent respectivement des lumières 11 arrangées pour recevoir des éléments de barrage constituant le premier réseau 3 d'éléments de barrage. Ces éléments seront détaillés plus loin. Avantageusement, les lumières 11 de chaque couronnes 14, 15 sont équidistantes les unes des autres.

La traverse 16 comporte un trou traversant 12 destiné à recevoir un moyen de fixation 5 se présentant sous la forme d'un pieu ou équivalent. Dans le mode de réalisation illustré, le moyen de fixation 5 comprend une tige 18 permettant un ancrage dans l'enrochement, l'acropode ou le quai, ladite tige étant pourvue à l'une de ses extrémités d'une tête 19 de dimensions supérieures à celle du trou 12 pour assurer la retenu de la plaque 10 lorsque celle-ci est fixée sur l'enrochement.

Le premier réseau 3 d'éléments de barrage est formé de tiges 6 distinctes fixées sur la plaque 10. Chaque tige 6 est montée au travers d'une des lumières 11 de la plaque prévue à cet effet, et s'étend de part et d'autre de la plaque 10. Dans le mode de réalisation illustrée, les tiges sont rectilignes et avantageusement de longueurs différentes. Elles s'étendent sensiblement verticalement (perpendiculairement) par rapport au plan de la plaque. Elles sont en outre agencées par rapport à la plaque 10 de façon à présenter un barrage non linéaire de part et d'autre du support. Les tiges, de préférence rigides, sont avantageusement en bois ou élastomère. Dans le mode de réalisation illustré (ainsi que dans les modes de réalisation illustrés par la suite), les tiges 6 s'étendent avantageusement de part et d'autre de la plaque. Il peut être prévu également un dispositif de barrage dans lequel les tiges s'étendent d'un seul côté de la plaque support, depuis ladite plaque, dans une direction sensiblement perpendiculaire au plan de ladite plaque.

Avantageusement, les tiges 6 sont espacées les unes des autres d'au moins 4 centimètres et d'au plus 8 centimètres, l'écartement étant défini suivant la taille des poissons auxquels on souhaite faire barrage. Cela permet d'assurer un barrage efficace contre les poissons prédateurs tout en offrant un passage aisé des juvéniles à protéger.

Il est bien entendu évident que la position des tiges 6 les unes par rapport aux autres illustrée sur la figure 1 est donnée à titre d'exemple et que le dispositif selon l'invention ne se limite pas à un tel agencement (la figure 3 donne un autre exemple de distribution des tiges 6). La disposition des tiges sera en effet choisie en fonction de l'environnement dans lequel il va être monté, et en particulier en fonction de la forme et de la taille des anfractuosités à obstruer. Selon une configuration avantageuse, les tiges 6 sont montées coulissantes au travers des lumières 11 ménagées dans la plaque. La position de ces dernières par rapport à la plaque 10 peut ainsi être réglée et adaptée au type d'anfractuosités à obturer. Avantageusement, les tiges 6 et les lumières 11 de la plaque 10 sont dimensionnées pour que le montage et le coulissement des tiges 6 au travers des lumières 11 s'effectuent en force. Selon une variante de réalisation, le dispositif comprend des moyens de blocage des tiges 6 sur la plaque.

Avantageusement, les tiges 6 du premier réseau sont amovibles.

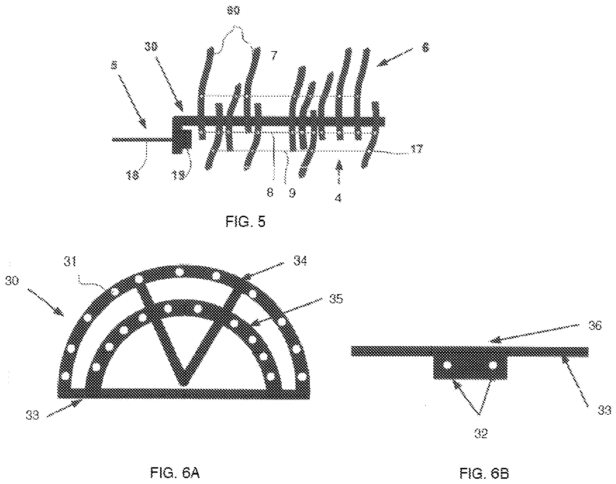

Le deuxième réseau 4 d'éléments de barrage est formé de brins reliant certaines ou l'ensemble des tiges 6 du premier réseau entre elles. Dans le mode de réalisation illustré, les brins sont répartis de manière à former au moins deux niveaux d'éléments de barrage 7, 8 indépendants et distincts. Les brins de chaque niveau 7, 8 sont arrangés pour s'étendre dans un plan sensiblement parallèle au plan de la plaque 10. Avantageusement, les brins 7, 8 passent au travers de trous traversant 17 ménagés sur les tiges 6 du premier réseau. Dans le mode de réalisation illustré, les tiges 6 du premier réseau comportent respectivement deux trous traversant 17 pour assurer la formation de deux niveaux de brins parallèles entre eux. Pour ce faire, les tiges 6 sont positionnées sur la plaque 10 de manière à ce que le trou 17 supérieur et inférieur d'une tige 6 soient disposés à la même hauteur respectivement que les trous supérieurs et les trous inférieurs des tiges adjacentes. Il est bien entendu évident que l'invention ne se limite pas à cette configuration et qu'il peut être prévu des tiges pourvus d'un nombre de trous supérieurs à deux, comme l'illustre par exemple les figures 3 et 5. Avantageusement, les trous 17 de chaque tige 6 sont prévus pour présenter un écartement entre eux identique.

Selon une distribution particulière non représentée, chaque niveau d'éléments de barrage comprend autant de brins distincts qu'il y a de couronnes, chaque brin reliant les tiges d'une même couronne. Ainsi, dans le mode de réalisation décrit, chaque niveau comprend deux brins, l'un des brins reliant les tiges montées sur la couronne extérieure 14, l'autre brin reliant les tiges 6 montées sur la couronne intérieure 15. Les brins définissent ainsi un réseau d'éléments de barrage circulaire.

Dans un autre mode de réalisation, il peut être prévu que chaque niveau d'éléments de barrage soit formé d'un brin unique.

Par ailleurs, et bien que non illustré, il peut être prévu une répartition des brins de façon à former un deuxième réseau d'éléments de barrage en tout ou partie non coplanaire avec la plaque, la non coplanarité étant obtenue soit en reliant entre eux des trous à des hauteurs différentes, soient en positionnant les tiges de manière à présenter les trous à des hauteurs différentes par rapport à la plaque 10.

Par ailleurs, le deuxième réseau ne se limite pas à deux brins indépendants et distincts. Il peut être formé d'un seul brin reliant les tiges 6 du premier réseau, en tout ou partie, de manière à former un ou plusieurs niveaux de barrage. De même, le deuxième réseau peut être formé de plus de deux brins indépendants, chaque brins reliant les tiges 6 du premier réseau, en tout ou partie, de manière à former un ou plusieurs niveaux de barrage. La figure 3 montre un dispositif de barrage présentant un deuxième réseau à trois niveaux de barrage, deux niveaux étant ménagés au-dessus de la plaque 10, un étant ménagé sous ladite plaque.

Avantageusement, les brins sont des fibres textiles biodégradables.

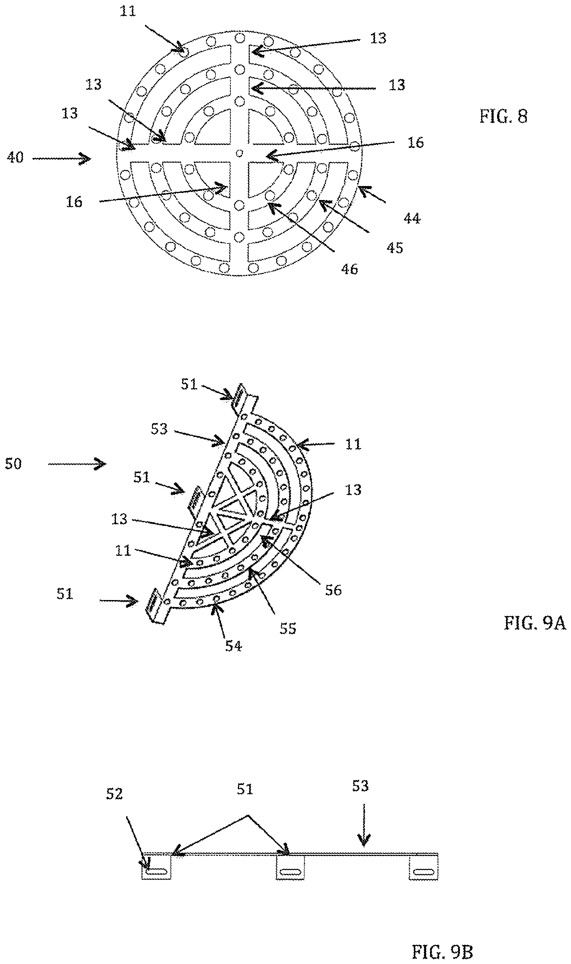

La figure 8 illustre une variante de réalisation de la plaque illustrée sur la figure 2.

Dans cette variante, la plaque 40 est formée de trois couronnes concentriques 44, 45, 46, chaque couronne étant reliée avec la couronne adjacente par des entretoises 13. Dans la variante illustrée, chaque couronne 44 à 46 est reliée avec la couronne adjacente par quatre entretoises, lesdites entretoises 13 étant avantageusement arrangées pour définir deux rangées d'entretoises, perpendiculaires l'une à l'autre. La couronne intérieure 46 est pourvue de deux traverses 16, disposées avantageusement perpendiculairement l'une par rapport à l'autre et dans le prolongement d'une paire d'entretoises. Il est bien entendu évident que le nombre de couronnes ne se limite pas au nombre de couronnes illustré sur les figures 2 et 8, et qu'il peut être prévu une plaque comportant une seule couronne ou plus de trois couronnes sans sortir du cadre de l'invention.

Dans cette variante de réalisation, les brins sont arrangés de manière à définir un réseau d'éléments de barrage semi-circulaire.

La figure 4 illustre un autre mode de réalisation dans lequel le support est une plaque ajourée 20 en forme d'étoile. Plus particulièrement, la plaque 20 comporte un moyeu central 23 à partir duquel des bras 24 s'étendent. Dans le mode de réalisation illustré, la plaque 20 comporte six bras 24 angulairement équidistants les uns des autres autour du moyeu central 23. Il est bien entendu évident qu'il s'agit d'un exemple de réalisation, et que la plaque n'est pas limitée au nombre de bras représenté (la plaque peut comporter moins de six bras ou plus de six bras), et qu'en outre les bras peuvent présenter une distribution non régulière. Chaque bras 24 est pourvu de lumières 21 de réception des éléments de barrage du premier réseau. De même que la transverse 16 de la plaque 10 précédemment décrite, le moyeu central 23 est pourvu d'un trou 22 pour la réception d'un moyen de fixation.

Le support n'est bien entendu pas limité aux formes de plaques précédemment décrites, d'autres autres formes pouvant être prévues sans sortir du cadre de l'invention (la figure 6A illustre un exemple d'autres réalisations possibles lequel sera décrit plus loin). Par ailleurs, les plaques illustrées sont planes. Il est bien entendu évident que l'invention ne se limite pas à cette configuration et qu'il peut être prévu une plaque de forme incurvée ou autre.

Dans cette variante de réalisation, chaque brin relie avantageusement les bras 24 entre eux de manière à définir un réseau semi-circulaire d'éléments de barrage de forme circulaire.

Les figures 5, 6A et 6B illustrent un autre mode de réalisation de l'invention.

Dans ce mode de réalisation, le support est une plaque ajourée 30 en forme d'une demi couronne 34 à l'intérieur de laquelle s'étend une deuxième demi-couronne 35 (figure 6A). Les deux demi-couronnes 34, 35, avantageusement concentriques, sont pourvues de trous 31 destinés à recevoir les éléments de barrages du premier réseau. La zone de fixation de la plaque est formée par au moins une platine définissant un rebord 36 de la partie 33 de la plaque 30 définissant la base des deux demi-couronnes (figures 5 et 6B). Dans le mode de réalisation illustré, le rebord 36 comprend deux trous 32 pour recevoir les moyens de fixation 5. Il est bien entendu évident que selon la taille et la forme du support, le rebord pourra s'étendre sur toute la longueur de la base des deux demi-couronnes mais également pourra comprendre un seul trou ou plus de deux trous.

Dans le mode de réalisation illustré, les tiges 60 du premier réseau 3 sont légèrement courbées. Elles comprennent respectivement deux trous traversants 17 pour le passage des brins 8, 9 constituant les éléments de barrage du deuxième réseau. Elles sont disposées sur la plaque 30 pour permettre la réalisation d'un réseau d'éléments de barrage à deux niveaux. Comme précédemment, les brins sont distribués de manière à définir un deuxième réseau d'éléments de barrage circulaire.

Les figures 9A et 9B illustrent une variante de réalisation de la plaque semi-circulaire illustrée sur les figures 6A, 6B. Dans cette variante, la plaque semi-circulaire 50 est formée de trois demi-couronnes concentriques 54 à 56 s'étendant depuis un profilé droit 53, les demi-couronnes et le profilé étant pourvus de lumières 11 pour la réception des éléments de barrage du premier réseau. Le profilé 53 définit la base des demi-couronnes 54 à 56. La plaque 50 comporte en outre trois platines 51 s'étendant perpendiculairement au profilé 53. Elles définissent ainsi des rebords du profilé. Dans le mode de réalisation illustré, chaque platine 51 comporte un trou oblong 52 pour recevoir les moyens de fixation. Avantageusement, la plaque 50 comporte une pluralité d'entretoises 13 reliant le profilé 53 de base avec la couronne intérieure 56 (i.e. la couronne la plus proche du profilé 53) d'une part, et les couronnes 54 à 56 entre elles d'autre part. Avantageusement, les brins sont agencés pour définir un réseau d'éléments de barrage semi-circulaire.

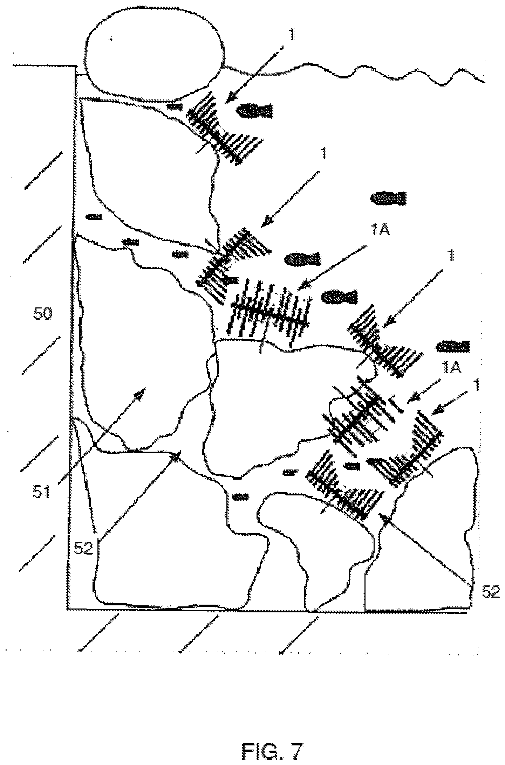

La figure 7 illustre les dispositifs de barrage 1, 1A précédemment décrits fixés sur des rochers 51 disposés le long d'une construction. Les dispositifs de barrage sont disposés de manière à s'étendre au travers des anfractuosités 52 délimitées par les rochers 51 pour en limiter l'accès, seul ou en association avec d'autres dispositifs de barrage similaires. Les dispositifs de barrage 1, 1A ainsi agencés les uns par rapport aux autres et/ou avec les rochers 51 offrent des zones d'accès limitées à certains poissons. Il s'agit bien entendu d'un exemple de mise en œuvre des dispositifs de barrage selon l'invention, étant entendu que ces derniers peuvent être également mis en œuvre sur toute structure définissant ou non des zones de passages, fissures ou autres, telle que des acropodes, quais ou autres.

L'invention est décrite dans ce qui précède à titre d'exemple. Il est entendu que l'homme du métier est à même de réaliser différentes variantes de réalisation de l'invention sans pour autant sortir du cadre de l'invention défini par les revendications annexées.

## Revendications

1. Dispositif de barrage (1, 1A) de l'entrée d'une anfractuosité (52) d'une construction (50) au moins en partie immergée pour la réalisation d'un habitat artificiel sécurisé pour des poissons de tailles données, et notamment des alevins, ledit dispositif comprenant :
- une plaque (10, 20, 30, 40, 50),
- un premier réseau (3) d'éléments de barrage formés de tiges (6, 60) fixées sur la plaque (10 à 50), lesdites tiges s'étendant perpendiculairement par rapport au plan de ladite plaque (10 à 50),
- un deuxième réseau (4) d'éléments de barrage formés d'au moins un brin (7, 8) reliant des tiges (6, 60) du premier réseau (3) entre elles, et
- des moyens de fixation (5) de la plaque (10 à 50) sur un enrochement délimitant en tout ou partie l'anfractuosité,
**caractérisé en ce que** lesdits moyens de fixation se présentent sous la forme d'un pieu ou tige (18) permettant un ancrage dans l'enrochement.

2. Dispositif de barrage (1, 1A) selon la revendication 1, **caractérisé en ce que** le ou les brins (7, 8) du deuxième réseau (4) est (sont) agencé(s) par rapport aux tiges (6, 60) du premier réseau (3) de sorte à former un réseau transversal au premier réseau (3).

3. Dispositif de barrage (1, 1A) selon l'une quelconque des revendications précédentes, **caractérisé en ce que** chaque tige (6, 60) du premier réseau (3) présente un écartement avec une tige (6, 60) adjacente du premier réseau (3) compris entre 4 centimètres et 8 centimètres.

4. Dispositif de barrage (1, 1A) selon l'une quelconque des revendications précédentes, **caractérisé en ce que** le premier réseau (3) est formé de tiges (6, 60) de longueurs différentes.

5. Dispositif de barrage (1, 1A) selon l'une quelconque des revendications précédentes, **caractérisé en ce que** le premier réseau (3) est formé de tiges (6, 60) s'étendant de part et d'autre de la plaque (10 à 50).

6. Dispositif de barrage (1, 1A) selon l'une quelconque des revendications précédentes, **caractérisé en ce que** tout ou partie des tiges (6, 60) du premier réseau (3) sont montées coulissantes au travers de lumières ménagées dans la plaque (10 à 50).

7. Dispositif de barrage (1, 1A) selon l'une quelconque des revendications précédentes, **caractérisé en ce que** les tiges (6, 60) du premier réseau (3) sont montées de manière amovible sur la plaque (10 à 50).

8. Dispositif de barrage (1, 1A) selon l'une quelconque des revendications précédentes, **caractérisé en ce que** le premier réseau (3) est formé en tout ou partie de tiges (6, 60) rigides.

9. Dispositif de barrage (1, 1A) selon l'une quelconque des revendications précédentes, **caractérisé en ce que** le premier réseau (3) est formé en tout ou partie de tiges (6, 60) en bois et/ou en élastomère.

10. Dispositif de barrage (1, 1A) selon l'une quelconque des revendications précédentes, **caractérisé en ce que** les brins (6, 7) du deuxième réseau (4) sont répartis de manière à former au moins deux niveaux d'éléments de barrage (7, 8).

11. Dispositif de barrage (1, 1A) selon l'une quelconque des revendications précédentes, **caractérisé en ce que** les brins (6, 7) du deuxième réseau (4) sont arrangés pour s'étendre dans un plan sensiblement parallèle au plan de la plaque 10.

12. Dispositif de barrage (1, 1A) selon l'une quelconque des revendications précédentes, **caractérisé en ce que** les brins (6, 7) du deuxième réseau (4) sont arrangés pour définir un réseau d'éléments de barrages circulaire ou semi-circulaire.

13. Dispositif de barrage (1, 1A) selon l'une quelconque des revendications précédentes, **caractérisé en ce que** le deuxième réseau (4) est formé en tout ou partie de brins (7, 8) de fibres textiles biodégradable.

14. Dispositif de barrage (1, 1A) selon l'une quelconque des revendications précédentes, **caractérisé en ce que** la plaque (10 à 50) est ajourée.

15. Procédé pour la réalisation d'un habitat artificiel sécurisé pour des poissons de tailles données, et notamment des alevins, le procédé consistant à fixer un dispositif de barrage (1, 1A) selon l'une quelconque des revendications précédentes sur un enrochement délimitant en tout ou partie une anfractuosité, le dispositif de barrage étant placé de façon à ce que les tiges (6, 60) du premier réseau (3) s'étendent en tout ou partie au travers de l'anfractuosité pour en limiter l'accès.

## Patentansprüche

1. Vorrichtung (1, 1A) zum Eindämmen des Eingangs eines Spalts (52) einer zumindest teilweise untergetauchten Konstruktion (50) zur Schaffung eines sicheren künstlichen Lebensraums für Fische bestimmter Größen, insbesondere für Jungfische, wobei die Vorrichtung Folgendes umfasst:
- eine Platte (10, 20, 30, 40, 50),
- ein erstes Gitter (3) von Barriereelementen, die aus Stäben (6, 60) gebildet sind, die an der Platte (10 bis 50) befestigt sind, wobei sich die Stäbe senkrecht in Bezug auf die Ebene der Platte (10 bis 50) erstrecken,
- ein zweites Gitter (4) von Barriereelementen, die durch mindestens einen Strang (7, 8) gebildet wird, der Stäbe (6, 60) des ersten Gitters (3) miteinander verbindet, und
- Mittel (5) zur Befestigung der Platte (10 bis 50) an einer Gesteinsschüttung, die den Spalt ganz oder teilweise begrenzt, **dadurch gekennzeichnet, dass** die Befestigungsmittel die Form eines Pfahls oder Stabs (18) haben, die eine Verankerung in der Gesteinsschüttung ermöglicht.

2. Barrierevorrichtung (1, 1A) nach Anspruch 1, **dadurch gekennzeichnet, dass** der Strang oder die Stränge (7, 8) des zweiten Gitters (4) relativ zu den Stäben (6, 60) des ersten Gitters (3) so angeordnet ist oder sind, dass sie ein Gitter quer zum ersten Gitter (3) bilden.

3. Barrierevorrichtung (1, 1A) nach einem der vorhergehenden Ansprüche, **dadurch gekennzeichnet, dass** jeder Stab (6, 60) des ersten Gitters (3) einen Abstand mit einem benachbarten Stab (6, 60) des ersten Gitters (3) von zwischen 4 Zentimetern und 8 Zentimetern aufweist.

4. Barrierevorrichtung (1, 1A) nach einem der vorhergehenden Ansprüche, **dadurch gekennzeichnet, dass** das erste Gitter (3) aus Stäben (6, 60) unterschiedlicher Länge gebildet ist.

5. Barrierevorrichtung (1, 1A) nach einem der vorhergehenden Ansprüche, **dadurch gekennzeichnet, dass** das erste Gitter (3) aus Stäben (6, 60) gebildet ist, die sich auf beiden Seiten der Platte (10 bis 50) erstrecken.

6. Barrierevorrichtung (1, 1A) nach einem der vorhergehenden Ansprüche, **dadurch gekennzeichnet, dass** alle oder ein Teil der Stäbe (6, 60) des ersten Gitters (3) so montiert sind, dass sie durch in der Platte (10 bis 50) vorgesehene Schlitze gleiten.

7. Barrierevorrichtung (1, 1A) nach einem der vorhergehenden Ansprüche, **dadurch gekennzeichnet, dass** die Stäbe (6, 60) des ersten Gitters (3) abnehmbar auf der Platte (10 bis 50) montiert sind.

8. Barrierevorrichtung (1, 1A) nach einem der vorhergehenden Ansprüche, **dadurch gekennzeichnet, dass** das erste Gitter (3) ganz oder teilweise aus starren Stäben (6, 60) gebildet ist.

9. Barrierevorrichtung (1, 1A) nach einem der vorhergehenden Ansprüche, **dadurch gekennzeichnet, dass** das erste Gitter (3) ganz oder teilweise aus Stäben (6, 60) gebildet ist, die aus Holz und/oder Elastomer bestehen.

10. Barrierevorrichtung (1, 1A) nach einem der vorhergehenden Ansprüche, **dadurch gekennzeichnet, dass** die Stränge (6, 7) des zweiten Gitters (4) so verteilt sind, dass sie mindestens zwei Ebenen von Barriereelementen (7, 8) bilden.

11. Barrierevorrichtung (1, 1A) nach einem der vorhergehenden Ansprüche, **dadurch gekennzeichnet, dass** die Stränge (6, 7) des zweiten Gitters (4) so angeordnet sind, dass sie sich in einer Ebene im Wesentlichen parallel zur Ebene der Platte 10 erstrecken.

12. Barrierevorrichtung (1, 1A) nach einem der vorhergehenden Ansprüche, **dadurch gekennzeichnet, dass** die Stränge (6, 7) des zweiten Gitters (4) so angeordnet sind, dass sie ein kreisförmiges oder halbkreisförmiges Gitter von Barriereelementen definieren.

13. Barrierevorrichtung (1, 1A) nach einem der vorhergehenden Ansprüche, **dadurch gekennzeichnet, dass** das zweite Gitter (4) ganz oder teilweise aus Strängen (7, 8) aus biologisch abbaubaren Textilfasern gebildet ist.

14. Barrierevorrichtung (1, 1A) nach einem der vorhergehenden Ansprüche, **dadurch gekennzeichnet, dass** die Platte (10 bis 50) perforiert ist.

15. Verfahren zur Schaffung eines sicheren künstlichen Lebensraums für Fische gegebener Größe, insbesondere für Jungfische, wobei das Verfahren darin besteht, eine Barrierevorrichtung (1, 1A) nach einem der vorhergehenden Ansprüche auf einer Gesteinsschüttung zu befestigen, die ganz oder teilweise einen Spalt begrenzt, wobei die Barrierevorrichtung so angeordnet ist, dass die Stäbe (6, 60) des ersten Gitters (3) sich ganz oder teilweise durch den Spalt erstrecken, um den Zugang zu diesem zu begrenzen.

## Claims

1. Device (1, 1A) for barring the entrance to a crevice (52) of a construction (50) which is at least partly submerged in order to produce a secure artificial habitat for fish of given sizes, and in particular fry, said device comprising:
- a plate (10, 20, 30, 40, 50);
- a first network (3) of barrier elements formed from rods (6, 60) fixed to the plate (10 to 50), said rods extending perpendicularly with respect to the plane of said plate (10 to 50);
- a second network (4) of barrier elements formed from at least one strand (7, 8) which interconnects the rods (6, 60) of the first network (3); and
- means (5) for fixing the plate (10 to 50) on a rockfill fully or partly delimiting the crevice,
**characterized in that** said fixing means are in the form of a stake or rod (18) making an anchoring in the rockfill possible.

2. Barrier device (1, 1A) according to claim 1, **characterized in that** the strand or strands (7, 8) of the second network (4) is (are) arranged relative to the rods (6, 60) of the first network (3) so as to form a transverse network to the first network (3).

3. Barrier device (1, 1A) according to either of the preceding claims, **characterized in that** each rod (6, 60) of the first network (3) has a distance from an adjacent rod (6, 60) of the first network (3) of between 4 centimeters and 8 centimeters.

4. Barrier device (1, 1A) according to any of the preceding claims, **characterized in that** the first network (3) is formed from rods (6, 60) of different lengths.

5. Barrier device (1, 1A) according to any of the preceding claims, **characterized in that** the first network (3) is formed from rods (6, 60) extending on either side of the plate (10 to 50).

6. Barrier device (1, 1A) according to any of the preceding claims, **characterized in that** all or part of the rods (6, 60) of the first network (3) are mounted so as to slide through openings made in the plate (10 to 50).

7. Barrier device (1, 1A) according to any of the preceding claims, **characterized in that** the rods (6, 60) of the first network (3) are removably mounted on the plate (10 to 50).

8. Barrier device (1, 1A) according to any of the preceding claims, **characterized in that** the first network (3) is formed fully or partly from rigid rods (6, 60).

9. Barrier device (1, 1A) according to any of the preceding claims, **characterized in that** the first network (3) is formed fully or partly from rods (6, 60) made of wood and/or elastomer.

10. Barrier device (1, 1A) according to any of the preceding claims, **characterized in that** the strands (6, 7) of the second network (4) are distributed so as to form at least two levels of barrier elements (7, 8).

11. Barrier device (1, 1A) according to any of the preceding claims, **characterized in that** the strands (6, 7) of the second network (4) are arranged so as to extend in a plane which is substantially in parallel with the plane of the plate 10.

12. Barrier device (1, 1A) according to any of the preceding claims, **characterized in that** the strands (6, 7) of the second network (4) are arranged so as to define a network of circular or semi-circular barrier elements.

13. Barrier device (1, 1A) according to any of the preceding claims, **characterized in that** the second network (4) is formed fully or partly from strands (7, 8) of biodegradable textile fibers.

14. Barrier device (1, 1A) according to any of the preceding claims, **characterized in that** the plate (10 to 50) is perforated.

15. Method for producing a secure artificial habitat for fish of given sizes, and in particular fry, the method consisting of fixing a barrier device (1, 1A) according to any of the preceding claims on a rockfill fully or partly delimiting a crevice, the barrier device being placed such that the rods (6, 60) of the first network (3) fully or partly extend through the crevice in order to limit access.
